# EUROPEAN PATENT SPECIFICATION

(11) **EP 0 723 936 B1**
(45) Date of publication and mention of the grant of the patent: **12.05.1999**
(21) Application number: 96300652.3
(22) Date of filing: 30.01.1996
(51) Int. Cl.: C02F 1/46

(54) **A composite electrode construction for electrolysis of water**
Vorrichtung einer zusammengesetzten Elektrode für die Elektrolyse von Wasser
Construction d'une électrode composite pour l'électrolyse de l'eau

(30) Priority: 30.01.1995 JP 31848/95
(43) Date of publication of application: 31.07.1996
(73) Proprietor: FIRST OCEAN CO., LTD., Tokyo (JP)
(72) Inventor: Sano, Yoichi, Zushi-shi, Kanagawa-ken (JP)
(74) Representative: Senior, Alan Murray

(56) References cited:
- EP-A- 0 342 167
- EP-A- 0 342 168
- WO-A-91/12358
- WO-A-93/15022

## Description

This invention relates to an electrode which is used for electrolysis of water or water which includes electrolytes, and more particularly relates to an electrode for electrolysis to produce acid and alkaline ionized water.

A method to produce acid and alkaline ionized water by electrolysis of water or water which includes electrolytes is a well-known technique. And by using this technique, a method of manufacturing healthy drinking water or sterile water is becoming popular. Many methods or equipments are proposed in prior arts, such as Japanese patent publication 4-28239, 4-57394, Japanese Laid-open publication 6-47376, 6-55173 and 6-246268. Construction of an apparatus for producing ionized water is characterized as installing cathode and anode in water or water which includes electrolytes with a distance, separating the ionized water by a diaphragm between the two electrodes.

Usually, to obtain a higher electrolysis efficiency, the distance between cathode and anode is designed to be as short as possible. As an electrolysis reaction occurs at the surface of two electrodes in water or water which includes electrolytes, acid and alkaline ions and gases are generated in two narrow spaces between the electrodes and a diaphragm. To obtain high electrolysis efficiency on the objected water, generated ions must be dispersed smoothly into water or water which includes electrolytes and generated gases must be diffused quickly. Consequently, the construction of apparatus becomes more complicated to satisfy these above mentioned conditions. The object of this invention is to provide an apparatus for electrolysis which improves an electrolysis efficiency by shortening the distance between two electrodes as narrow as possible on accomplishing a smooth dispersion of generated ions and quick diffusion of generated gases, and also to simplify a construction which holds electrodes and diaphragms etc, to be attached to an apparatus for electrolysis.

Thereupon, since a previous apparatus for electrolysis of water has a problem with complicated construction of it, the inventor has conducted intensive studies to reduce the problem, and has accomplished this invention.

According to the present invention there is provided an electrode composition for electrolysis of water, comprising a panel of which one surface is made from electric conductive material and another surface is made from non-electric conductive material, plural holes are bored through said panel, two said panels are arranged so as to hold a diaphragm between the surface of non-electric conductive material of each panel and electrolysis reaction occurs at the outer side of an anode and cathode of said electrode composition.

The invention will now be described by way of example only with reference to the accompanying drawings in which:
Figure 1 is a perspective view of an example of the composite electrode construction of this invention;
Figure 2 is a cross section taken on line A - A' in Figure 1; and
Figure 3 is a schematic illustration of an electrolysis vessel in which the electrode is arranged.

When voltage is loaded on to a cathode and anode which are placed in water. electrons transfer between surface of electrodes and electrolytic dissociated water or electrolyte. In the case of NaCl is used as an electrolyte, oxygen gas or chlorine gas, is generated on anode side and hydrogen ion and hydronium ion are generated simultaneously in fluid, thus the fluid becomes acidic On cathode side, hydrogen gas and simultaneously hydroxide ion are generated, and so the fluid becomes alkaline. Electrons which transferred from cathode to fluid, migrate in the fluid and come to anode. That is, an electric current flows from anode to cathode.

As reactions which generate ions and gases are taken place closely at the surfaces of cathode and anode. concentration of ions surrounding electrodes become higher. That is, a gradient of ionic concentration is caused. Generally, it is understood that generated substances closely to electrodes such as ions or others are transferred or dispersed by a driving force generated by a gradient of concentration, a gradient of electric potential and by convection of fluid, and a diaphragm stretched between cathode and anode acts to prevent two waters in cathode side and anode side from mixing.

In the case of using a conventional face to face panel shape electrode, electrolysis is actively progressed at the surface of cathode and anode which faced to a diaphragm located between two electrodes, and ion and gas is generated at each electrode. The generated gas becomes tiny bubbles and diffuses from a fluid exists between electrode and diaphragm, and cation and anion are dispersed by effects of gradient of concentration, gradient of electric potential and convection of fluid. Mixing of two fluid can be prevented by diaphragm, however, as there is a gradient of electric potential, ions which exist in the fluid transfer by electrophoresis through a diaphragm to another electrode. This physical phenomenon is put to practical use, for example in a case of production method of NaOH by electrolysis of NaCl. In this case, a generation of NaOH become possible by a transportation of sodium ion from anode side to cathode side by the electrophoresis phenomenon. The object of this invention is to produce an acid ionized water and alkaline ionized water, and to perform this object the generated cation and anion must stay closely to each side so as to make concentration higher. So the transferring of ion to another electrode is not desirable in this invention.

An important point of this invention is that cathode and anode is not arranged as face to face each other but arranged as back to back. As a faced side of each electrode is composed by non-electric conductive materials, and a diaphragm is arranged between electrodes, an electrolysis reaction is taken place at each outer surface of electrode and generates ions and gases. At this time, as electric current flows through holes bored on each electrodes and through the diaphragm to the outer surface of opposite electrode, a gradient of electric potential only exists in fluid between holes and diaphragm, and does not exist in fluid of outer electrode surface side. Therefore, generated ions disperse far from each electrode by effect of gradient of concentration and by convection, and ions that exist closely to holes bored on electrode partially transfer to the opposite electrode by effect of gradient of electric potential. Thus, generated gases are easily diffused from the fluid far from diaphragm.

At the electrolysis process, electron transfers through fluid between cathode and anode. A distance between electrodes, a diaphragm, and in the case of back to back electrode, holes bored on electrodes mainly causes electric resistance. To improve efficiency of electric power for performing electrolysis, it is desirable to make a distance between electrodes narrower so as to decrease electric resistance. However, in the case of face to face electrode construction, because it is necessary to consider about the transferring of fluid between electrodes and diffusion of gases, there is a limitation of the distance. In the case of back to back electrode construction of this invention, only insulator and a diaphragm are existing between two electrodes, and so it is not necessary to consider about the transferring of fluid and diffusion of gases between two electrodes. Therefore, in this case, a distance between two electrodes is equal to the sum total of thickness of two electrodes, two insulators and a diaphragm.

The surface 1 of the panel is composed by electric conductive materials such as copper, lead, nickel, chrome, titanium, gold, platinum, iron-oxide and graphite. Preferably it is composed by platinum. It is desirable to use a thin plate of metal of 5-100 micron thickness, and more desirably a plate of titanium having 0.1-5 milli meter thickness on which surface platinum is plated. Surface 2 of the panel is composed by non-electric conductive resins, such as polyethylene resin, polypropylene resin. polystyrene resin, polyethyleneterephthalate resin, polyethylenechloride resin, ABS resin acrylic resin, epoxy resin, teflon resin, ceramic, natural rubber, SBR, silicon rubber, chloroprene rubber, fiber reinforced plastic plate and thin film of non-electric conductive paints or synthetic resins. The surfaces 1 and 2 are tightly stuck to each other, and form a panel for cathode and anode.

Holes 3 are bored through the panel so as to be arranged on all active area for electrolysis reaction, and surface area of one hole is from 1 to 500mm². The ratio of surface area of holes to that of electrode is 10-90%. and is preferably 30-70%. Material of the diaphragm 4 is generally a non-woven cloth made from asbestos, glass wool. polyvinyl chloride fiber, polyvinylidene chloride fiber. polyester fiber or Kevlar fiber, an unglazed ceramic plate. a sheet of paper and a film of ion-exchange resins. The diaphragm 4 is held between surface 2 of anode and cathode. Anode, cathode and diaphragm can be arranged independently, or diaphragm can be stuck tightly to surface 2 of electrode. And also it is possible to put spacer (not indicated in the drawing) made from non-electric conductive materials to have a possibility of existing fluid between surface 2 and diaphragm 4.

By using the back to back electrode of this invention, because the distance between anode and cathode can be shortened to the sum total of thickness of the electrodes, the insulators and the diaphragm, it is possible to improve the efficiency of electric power for electrolysis. And, since there are not any generations of ion and gas between electrode and diaphragm, it can be ignored that inconsistency of electric current caused by increased electric resistance due to the remainder of gas in fluid or in diaphragm.

Generated ions on the back to back surface electrode of this invention disperse far from electrode by effect of gradient of concentration and by convection, and the transferring power to the opposite electrode by effect of gradient of electric potential is not strong. Therefore, the transferring of generated anion and cation to the opposite electrode is less, and consequently concentration of the object ion can be raised effectively.

In case of a conventional electrolysis method, plates of electrode and a diaphragm must be held independently. However, in the case of this invention, as it is possible to assemble them in simplified construction by sticking a diaphragm tightly or through the medium of spacer to an electrode, a holder to attach the electrode to an electrolysis vessel can be simplified. Therefore, the possibility for modification of electrode design is extended, and it becomes possible to manufacture not only a flat shape electrode but also a modified shape electrode such as having curved surface, spherical surface or angled shape.

This invention is further illustrated in the following examples, however it is to be understood that the invention is not intended to be limited to these examples.

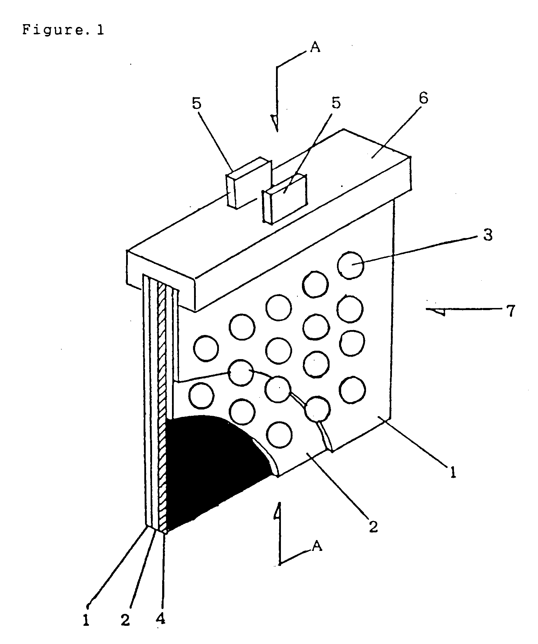

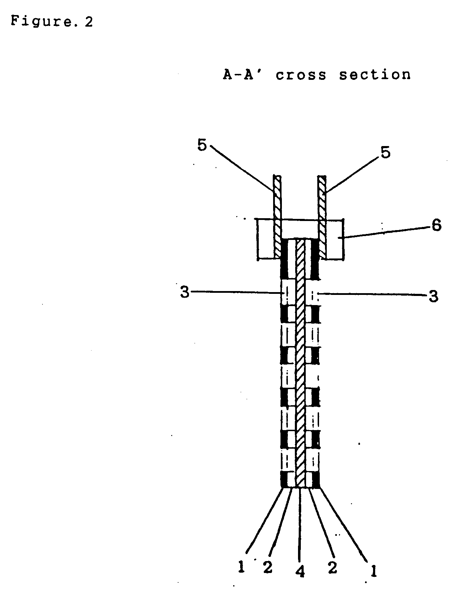

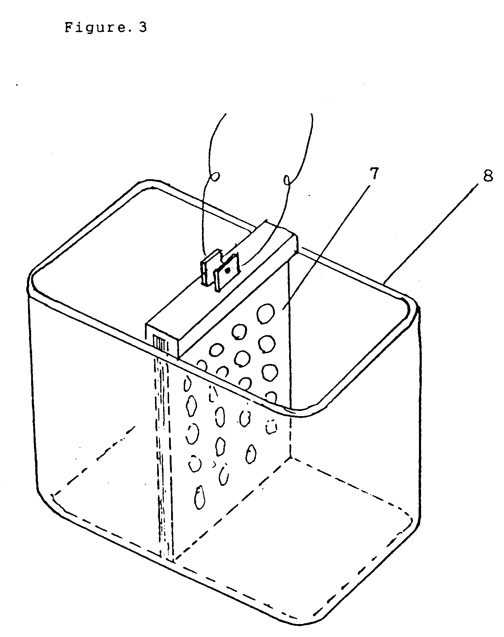

Fig. 1 and Fig. 2 is an illustration of the composite electrode construction 7 which is characterized as simplified by sticking an electrode closely to a diaphragm and arranged in a non-electric conductive frame 6 having contact points 5 for anode and cathode. Fig. 3 is an illustration showing the electrode construction 7 which is arranged in electrolysis chamber 8, and is characterized as to prevent leaking of contained fluid from contact portion of the chamber and the electrode.

### Example-1

Water solution which includes 0.03wt% of NaCl is prepared as a testing fluid to be electrolyzed. Two sheets of titanium plate of lmm thickness on which surface thin layer of platinum is plated, is prepared as the material of the panel and polyethylene film of 0.2mm thickness is spreaded over one surface of said platinum plated titanium plates and forms the panel.

Holes of 5mm diameter are bored in each panels as shown in Figure. 1 and 2. The distance between the center of each holes is 7.7mm and the ratio of surface area of holes to whole area is 33%. Said two panels are arranged so as to a polyethylene side is faced, and hold 0.17mm thickness membrene filter (Yumikron MF-60B. Yuasa Co., Ltd. Japan) as a diaphragm between them. The said membrene filter is a polyolefin coated high porous polyester film. Thus the electrode composition of this invention is assembled.

100mm × 100mm size of the electrode composition is placed at the center of one litre capacity electrolysis chamber 8. Said water solution which includes 0.03wt% of NaCl is poured into both separated spaces of the electrolysis chamber formed by the electrode, and mixing and leaking of the water solution can be perfectly prevented by the electrode composition.

Direct current of 13volt constant voltage is loaded, and pH and oxidation-reduction potential are measured according to the progress of time at anode and cathode side by using pH meter and ORP meter. And also the electric current is measured by ammeter. And an electric power efficiency until pH of anode side water becomes 2.7 is calculated. The electric power efficiency obtained by this experiment is 5.1watt·hour/L, and other results are shown in Table. 1.

### Example-2

Diameter of holes on the panels is changed to 7mm and the distance between centers of holes is set up to 10mm. In this case, the ratio of surface area of holes to whole area is 44%. Using same electrolysis equipment and same condition, electrolysis experiment is carried on. The obtained results are shown in Table.2.

In this case, the electric power efficiency to obtain pH 2.7 acid ionized water is 3.4watt·hour/L, and it excels to the result obtained in example-1. The effect of wider hole surface area is obvious.

### Example-3

0.17mm thickness of membrene filter(Yumicron-60B) is used as a diaphragm, and same panel to example-2 is used to assemble the electrode composition. 360mm × 500mm size of said electrode composition is prepared and placed at the center of 100 litre capacity electrolysis chamber. Same water solution to example-1 is poured into the chamber, and direct current of constant 15ampare is loaded. The obtained results are shown in Table. 3.

This experiment aims an actual application of the invention. And as the good electrical power efficiency is obtained, it seems that this invention has a good possibility of an actual use.

**Table.1**

| time (min) | volt (volt) | currrent (mA) | anode | | cathode | |
|---|---|---|---|---|---|---|
| | | | pH | ORP(mV) | pH | ORP(mV) |
| 0 | 12.8 | 245 | 7.32 | +458 | 7.32 | +458 |
| 15 | 13.9 | 360 | 2.88 | +1025 | 11.14 | -804 |
| 30 | 14.2 | 320 | 2.54 | +1088 | 11.57 | -862 |
| 60 | 14.5 | 280 | 2.32 | +1128 | 11.79 | -884 |
| 120 | 14.7 | 170 | 2.18 | +1173 | 11.95 | -895 |
| Electric power efficiency (pH2.7) 5.1 Watt·Hour/L | | | | | | |

**Table.2**

| time (min) | volt (volt) | currrent (mA) | anode | | cathode | |
|---|---|---|---|---|---|---|
| | | | pH | ORP(mV) | pH | ORP(mV) |
| 0 | 20.0 | 500 | 7.68 | +203 | 7.68 | +203 |
| 5 | 20.5 | 500 | 2.92 | +910 | 10.58 | -773 |
| 10 | 20.5 | 450 | 2.66 | +894 | | |
| 20 | 20.5 | 500 | 2.35 | +1010 | 11.44 | -867 |
| 30 | 20.6 | 500 | 2.20 | +1027 | 11.55 | |
| 40 | 21.0 | 500 | 2.08 | +1037 | 11.58 | -874 |
| 60 | 21.0 | 430 | 1.99 | +1086 | 11.64 | -881 |
| 80 | 21.0 | 450 | 1.96 | +1099 | 11.84 | |
| 100 | 21.0 | 450 | 1.94 | +1108 | 12.00 | -882 |
| 120 | 21.0 | 450 | 1.92 | +1121 | 12.01 | -880 |
| Electric power efficiency (pH2.7) 3.4 Watt·Hour/L | | | | | | |

**Table.3**

| time (min) | volt (volt) | currrent (A) | anode | | cathode | |
|---|---|---|---|---|---|---|
| | | | pH | ORP(mV) | pH | ORP(mV) |
| 0 | 29.3 | 15.0 | 7.54 | +502 | 7.54 | +502 |
| 10 | 28.5 | 15.0 | 4.33 | +906 | | |
| 20 | 26.5 | 15.0 | 2.98 | +1052 | 10.27 | -100 |
| 30 | 25.3 | 15.0 | 2.66 | +1104 | | |
| 40 | 24.8 | 15.0 | 2.57 | +1117 | | |
| 50 | 24.1 | 15.0 | 2.45 | +1130 | 11.34 | -888 |
| 60 | 23.8 | 15.0 | 2.38 | +1138 | | |
| 70 | 23.2 | 14.8 | 2.31 | +1144 | | |
| 90 | 22.8 | 14.7 | 2.21 | +1151 | | |
| 100 | 22.8 | 14.8 | 2.18 | +1155 | | |
| Electric power efficiency (pH2.7) 4.4 Watt·Hour/L | | | | | | |

When water or water which includes electrolytes is ionized to the lower level than pH 2.7, it is almost perfectly sterilized and can be used as germ-free water. And the electric power efficiency to obtain water of lower than pH 2.7 is better than that of a previous electrolysis method which is assumable as around 8-10 watt.hour/L. By using the electrode composition of this invention, germ-free water can be easily and economically obtained, which can be used for mass consumption in a hospital or elsewhere.

While the preferred form of the present invention has been described, it is to be understood that modifications will be apparent to these skilled in the art.

The scope of the invention, therefore, is to be determined solely by the following claims.

## Claims

1. A composite electrode (7) for use in the electrolysis of water, the composite electrode comprising:
two panels and a diaphragm (4), each panel comprising a first surface (1) made from an electrically conductive material and a second surface (2) made from a non-electrically conductive material, a plurality of holes (3) being bored through each panel, and the diaphragm (4) being arranged between the second surface (2) of one panel and the second surface (2) of the other panel.

2. A composite electrode according to claim 1, wherein the first surface (1) of at least one panel comprises platinum plated metal.

3. A composite electrode according to claim 1 or 2, wherein the second surface (2) of at least one panel comprises a polyethylene film.

4. A composite electrode according to claim 1, 2 or 3, wherein the area of holes (3) in at least one of said panels (1,2) comprises between 10% and 90% of the total area of said panel.

5. A composite electrode according to claim 4, wherein the area of holes (3) in at least one of said panels (1,2) comprises between 30% and 90% of the total area of said panel, and preferably between 30% and 70%.

6. A method of electrolysing water, comprising arranging the composite electrode (7) according to any preceding claim in an electrolysis chamber (8) to partition the chamber, and passing a direct current between anode and cathode of said composite electrode (7).

7. A method according to claim 6, wherein the composite electrode (7) is arranged approximately in the centre of the electrolysis chamber (8) to divide the chamber into two halves.

## Patentansprüche

1. Zusammengesetzte Elektrode (7) zur Verwendung bei der Elektrolyse von Wasser, wobei die Elektrode zwei Platten und eine Membran (4) umfaßt, wobei jede Platte eine erste, aus einem elektrisch leitenden Material hergestellte Oberfläche (1), und eine zweite, aus einem nicht elektrisch leitenden Material hergestellte Oberfläche (2) aufweist, eine Mehrzahl von Löchern (3) durch jede Platte gebohrt ist, und die Membran (4) zwischen der zweiten Oberfläche (2) der einen Platte und der zweiten Oberfläche (2) der zweiten Platte angeordnet ist..

2. Zusammengesetzte Elektrode nach Anspruch 1, dadurch gekennzeichnet, daß die erste Oberfläche (1) wenigstens einer Platte platinbeschichtetes Metall umfaßt.

3. Zusammengesetzte Elektrode nach Anspruch 1 oder 2, dadurch gekennzeichnet, daß die zweite Oberfläche (2) wenigstens einer Platte eine Polyethylenfolie umfaßt.

4. Zusammengesetzte Elektrode nach Anspruch 1, 2 oder 3, dadurch gekennzeichnet, daß die Fläche der Löcher (3) in wenigstens einer der Platten (1, 2) zwischen 10% und 90% der Gesamtfläche der Platte umfaßt.

5. Zusammengesetzte Elektrode nach Anspruch 4, dadurch gekennzeichnet, daß die Fläche der Löcher (3) in wenigstens einer der Platten (1, 2) zwischen 30% und 90% und vorzugsweise zwischen 30% und 70% der Gesamtfläche der Platte umfaßt.

6. Verfahren zur Elektrolyse von Wasser, umfassend das Anordnen der zusammengesetzten Elektrode (7) nach einem der vorhergehenden Ansprüche in einer Elektrolysekammer (8), um die Kammer aufzuteilen, und das Anlegen eines Gleichstroms zwischen Anode und Kathode der zusammengesetzten Elektrode (7).

7. Verfahren nach Anspruch 6, dadurch gekennzeichnet, daß die zusammengesetzte Elektrode (7) ungefähr in der Mitte der Elektrolysekammer (8) angeordnet ist, um die Kammer in zwei Hälften zu teilen.

## Revendications

1. Electrode composite (7) destinée à être utilisée dans l'électrolyse de l'eau, comprenant :
deux panneaux et un diaphragme (4), chaque panneau comprenant une première surface (1) faite d'un matériau conducteur de l'électricité et une deuxième surface (2) faite d'un matériau non conducteur de l'électricité, de multiples trous étant percés à travers chaque panneau, et le diaphragme (4) étant disposé entre la deuxième surface (2) d'un panneau et la deuxième surface (2) de l'autre panneau.

2. Electrode composite selon la revendication 1, dans laquelle la première surface (1) d'au moins un panneau comprend un métal revêtu de platine.

3. Electrode composite selon la revendication 1 ou la revendication 2, dans laquelle la deuxième surface (2) d'au moins un panneau comprend un film de polyéthylène.

4. Electrode composite selon l'une des revendications 1, 2 et 3, dans laquelle la surface des trous (3) dans au moins l'un desdits panneaux (1, 2) constitue entre 10 % et 90 % de la surface totale dudit panneau.

5. Electrode composite selon la revendication 4, dans laquelle la surface des trous (3) dans au moins l'un desdits panneaux (1, 2) constitue entre 30 % et 90 % de la surface totale dudit panneau, et de préférence entre 30 % et 70 %.

6. Procédé d'hydrolyse de l'eau, comprenant les étapes suivantes : disposer l'électrode composite (7) selon l'une des revendications précédentes dans une chambre d'électrolyse (8) pour cloisonner la chambre, et faire passer un courant continu entre l'anode et la cathode de ladite électrode composite (7).

7. Procédé selon la revendication 6, dans lequel l'électrode composite (7) est disposée sensiblement au centre de la chambre d'électrolyse (8) pour diviser la chambre en deux moitiés.
